Europäisches Patentamt

European Patent Office

Office européen des brevets

(11) Publication number: **0 266 524 B1**

## EUROPEAN PATENT SPECIFICATION

(45) Date of publication of patent specification: **08.05.91**  (51) Int. Cl.⁵: **G02B 6/24**, C03B 37/16

(21) Application number: **87113555.4**

(22) Date of filing: **16.09.87**

(54) **Portable compact tool for cleavage of optical fibre.**

(30) Priority: **08.10.86 US 916665**

(43) Date of publication of application:
**11.05.88 Bulletin 88/19**

(45) Publication of the grant of the patent:
**08.05.91 Bulletin 91/19**

(84) Designated Contracting States:
**BE DE FR GB**

(56) References cited:
**WO-A-83/02269**
**GB-A- 2 068 140**

(73) Proprietor: GTE Products Corporation
100 West 10th Street
Wilmington, DE 19801(US)

(72) Inventor: **Shank, Jeffrey B.**
**831 Faxon Parkway**
**Williamsport, PA 17701(US)**
Inventor: **Wentz, Jennifer J.**
**937 Arch Street**
**Williamsport, PA 17701(US)**

(74) Representative: **Patentanwälte Grünecker,**
**Kinkeldey, Stockmair & Partner**
**Maximilianstrasse 58**
**W-8000 München 22(DE)**

## Description

The present invention relates to a tool for cleaving optical fibers in accordance with the generic clause of Claim 1. Such a tool is known from GB-A-2 068 140.

Background Art

Existing hand held tools vary in size, shape and design. The hand held tool (ref. U.S. Pat. No. 4,074,840 issued Feb. 21, 1978 and U.S. Pat. No. 4,159,793 issued July 3, 1979) uses a score and break (SAB) technique. This involves the stretching of the fiber over a curved surface and a light scoring of the fiber by a hard, sharp edge, to produce a microcrack which diametrically propagates through the fiber to produce a clean break. This curved surface insures a proper break for fibers when submitted to increased tension.

The above mentioned tool and others that use the score and break technique are bulky and require special packaging for shipment and storage. They are not designed to survive the everyday hazards of mishandling in the lab or those that occur in the field (manhole/bucket truck). Field repair of cleaving tools is minimal. The majority of tools are returned to the original equipment manufacturer (O.E.M.) for rework. This inconvenience can be costly if mishap occurs during field installation. Costly, not only in the shop time, but replacement parts when the rework is completed.

Disclosure of Invention

It is the object of the present invention to provide a portable compact handheld pocket-sized tool for cleaving optical fibers which is cost effective, simple and easy to use, requires minimal maintenance and provides repetitive quality end faces for splicing, added safety, reliability and ruggedness.

This object is solved by a tool for cleaving optical fibers having the features of Claim 1.

Preferred embodiments are disclosed in the dependent claims.

This invention relates to an innovative design concept of a portable compact hand-held tool for optical waveguide end preparation. More particularly, it relates to such a tool that provides a quality end face; the convenience of an adjustable cleave length; impact resistance; field serviceability; safety orientation and user friendliness.

Brief Description of the Drawings

Fig. 1 is an elevational view of a portion of the invention;
Fig. 2 is a similar view of another portion;
Fig. 3 is a similar view of yet another portion;
Fig. 4 is a similar view partially assembled;
Fig. 5 is a similar view of still another portion;
Fig. 6 is a sectional view of the assembled invention;
Fig. 7 is an exploded, perspective view of the invention; and
Fig. 8 is a perspective view of the invention.

Best Mode for Carrying out the Invention

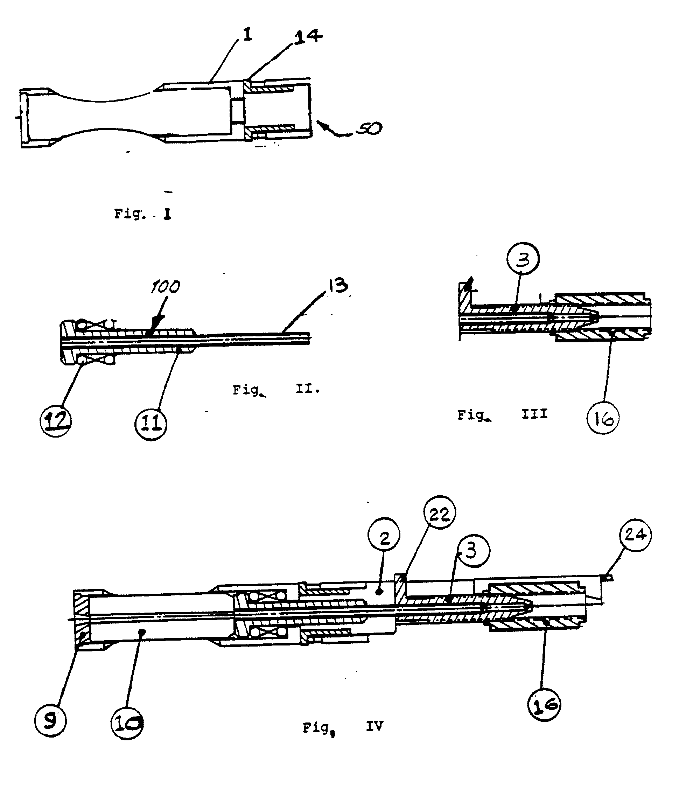

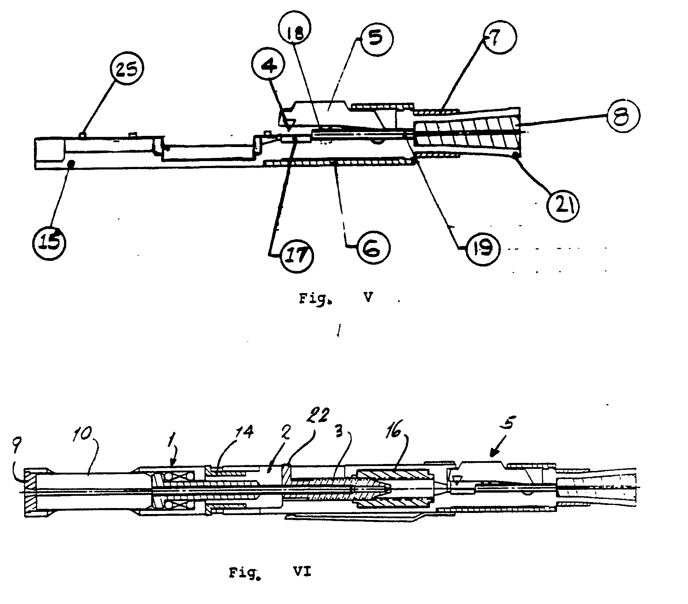

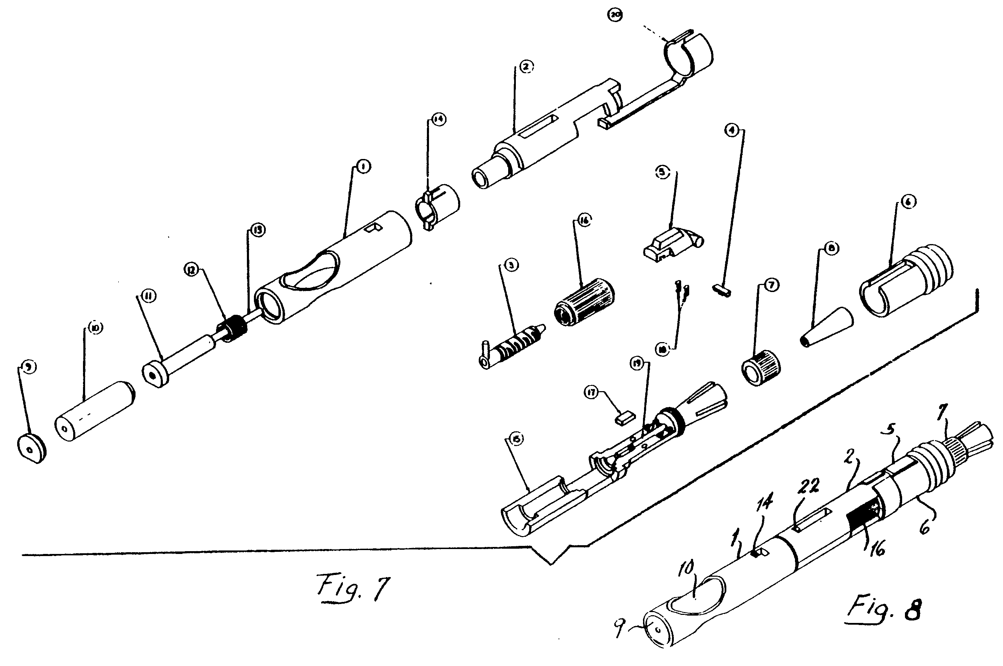

The pocket hand held optical waveguide cleaving tool is illustrated in Fig. 3 along with the separate components in Fig. 7. Cleaver assembly views are shown in Figs. 1-6. Start assembly by snapping the snap sleeve 14 into the bayonet sleeve 1 illustrated in FIGURE I. The outer tabs of the snap sleeve provide a lock for the bayonet sleeve during operation. Press fit the tube 13 into the spring pin 11. Slip the compression spring 12 over 11 and 13 as shown in FIGURE II. Thread the adjustment sleeve 16 one-third of the way over the fiber stop 3 as shown in FIGURE III. Next take assembly 50 and press fit over the end of the cleaver top 2. Insert assembly 100 through Assembly 50. The tube 13 will protrude first and when it does slip the fiber stop 3 over the tube, allowing the indicator post 22 to protrude through the slot in the cleaver top. Press fit the spring pin 11 into the cleaver top 2. Once assembled to this point the bayonet sleeve is under spring tension towards the cleaver top. Drop the buffer grip 10 in the rear cavity of the bayonet sleeve 1 and seal with the end cap 9. This step of assembly completion is shown in FIGURE IV.

The cleaver top assembly to this point permits the following functions: the bayonet sleeve 1 is to provide the operator with a pulling motion that will cause tension on the fiber and cause the microcrack to propagate through the fiber. The twist action locks the sleeve and the cleaved fiber back so as not to damage the quality end face. The buffer grip 10 provides an easy mechanical means of compensation for variance of buffered fiber sizes when cleaving. Cleave length adjustment ranging from 3mm to 15mm is provided by the fiber stop 3 mounted within the adjustment sleeve 16. The indicator post 22 of the stop protrudes through the cleaver top allowing for easy visual acknowledgement of the cleave length setting. The key 24 provides a set height for the pivot arm 5 and confines the holder when the rear diamond cover 6 is removed.

The following assembly is illustrated in FIGURE V. Cleaver base assembly is initiated by mounting the resilient pad 17 into its cavity in the cleaver base 15. Insert tube 19 into the small hole in the back of the cleaver base 15. Compress the collet tail 21 of the cleaver base and push the slide ring 7 over the fingers. Secure the fiber grip 8 into the rear collet feature 21 of the cleaver base 15. Insert the dovetailed cutting edge insert 4 in to the pivot arm 5. Set the compression springs 18 into the round pockets of the cleaver base 15. Snap the pivot arm 5 into the clips of the cleaver base 15. Align the compression springs 18 with the posts on the bottom of the pivot arm 5. The advantage of the dovetailed cutting edge insert 4 is that it allows the tool to be serviced in the field by the end user without having to return it to the O.E.M. for depth adjustment. The resilient pad 17 allows the fiber to be scored with a hard sharp edge which causes the fiber to compress into the pad. This action stops the fiber from breaking until there is longitudinal tension to initiate the score to propagate through the fiber and produce a clean break.

The final procedure is to place the top assembly shown in FIGURE VI on the cleaver base 15 using the alignment pins 25. This shrouds the adjustment assembly shown in Figure IV and the pivot arm within the cleaver top. Slide the pen chip 20 into position and then push the pivot arm cover 6 over the collet tail 21 snapping it into place as shown in FIGURE VI.

OPERATION PROCEDURES FOR THE PORTABLE POCKET HAND TOOL ARE AS FOLLOWS;

1. Adjust the fiberstop to cleave length desired.
2. Strip buffer coating to expose a minimum of 5.0cm (2.0 inches) of bare giber and clean with a suitable solvent and paper wipers.
3. Insert the bar fiber through the end cap until the buffer coatings stops within the fiber stop. Bare fiber should be visible close to the end of the fiber grip.
4. Push the slide ring out to compress the collet and grip the fiber.
5. Gently wipe your finger over the pivot arm button to have the cutting edge score the fiber.
6. Squeeze the buffer grip and pull the bayonet sleeve away from the cleaving area to provide the tension necessary to propagate the microcrack through the fiber. Twist over and lock in position.
7. Removed the cleaved fiber end to be used.
8. Push the slide ring back to open the collet and release the scrap fiber (to be discarded).

While there has been shown and described what are at present considered to be the preferred embodiments of the invention, it will be apparent to those skilled in the art that various changes and modifications can be made herein without departing from the scope of the invention as defined by the appended claims.

## Claims

1. A tool for cleaving optical fibers, said tool comprising an elongated body (1,2,6) having a longitudinal axis, an optical fiber receiving portion (13,19) extending through said body (1,2,6) and coaxial with said axis, cutting beans (4) for cutting said optical fiber, and fiber gripping means (8) adjacent said cutting means (4),

   **characterized in that**

   said body (1,2,6) has a substantially tubular shape,

   said fiber receiving portion is formed as a tube (13,19), and is positioned inside said body (1,2),

   length control means (3) for controlling the length of fiber to be cleaved and positioned substantially centrally with said body (1,2,6) is provided,

   and that means (10) for gripping the buffer coating on a fiber and positioned remote from said fiber gripping means (8) is provided.

2. A tool as claimed in claim 1, **characterised** in that said length control means (3) has an indicator post (22) protruding to the outside of said body (2) for visual acknowledgement of the cleave length setting.

3. A tool as claimed in claims 1 or 2, **characterized** in that said cutting means comprises a cutting edge insert (4) pivoting around a pivot arm (5) and a resilient pad (17) such that said fiber is compressed into said pad (17) while being scored by said cutting edge insert (4).

## Revendications

1. Outil de coupe de fibres optiques, le dit outil comprenant un corps (1, 2, 6) de forme allongée présentant un axe longitudinal, une partie (13, 19) de réception d'une fibre optique s'étendant à travers le dit corps (1, 2, 6) de façon coaxiale, un moyen de coupe (4) pour couper la dite fibre optique, et un moyen de saisie (8) de la fibre à côté du dit moyen de coupe (4), caractérisé en ce que le dit corps (1, 2, 6) affecte une forme substantiellement tubulaire, que la dite partie de réception d'une fibre affecte la forme d'un tube (13, 19) et est disposée a l'intérieur du dit corps (1, 2), qu'il comporte un moyen de contrôle de la longueur (3) pour contrôler la longueur d'une fibre à couper et positionné substantiellement au centre du dit corps (1, 2, 6), et qu'il comporte un moyen (10) de saisie du revêtement intermédiaire de la fibre et positionné loin du dit moyen (8) de saisie de la fibre.

2. Outil selon la revendication 1 caractérisé en ce que le dit moyen (3) de contrôle de la longueur comporte un montant indicateur (22) faisant saillie à l'extérieur du dit corps (2) pour un contrôle visuel du réglage de la longueur de coupe.

3. Outil selon la revendication 1 ou 2 caractérisé en ce que le dit moyen de coupe comporte un insert à bord caupant (4) pivotant autour d'un bras (5) formant pivot et une semelle élastique (17), de telle manière que la dite fibre est compressée dans la dite semelle (17) pendant l'incision par l'insert (4) à bord coupant.

**Ansprüche**

1. Ein Werkzeug zum Zertrennen von optischen Fasern, wobei das Werkzeug einen länglichen Körper (1,2,6) mit einer Längsachse, ein die optische Faser empfangendes Teil (13,19), das sich durch den Körper (1,2,6) erstreckt und koaxial zu der Achse gelegen ist, eine Schneideinrichtung (4) zum Zerschneiden der optischen Faser, und eine zu der Schneideinrichtung (4) benachbarte Fasergreifeinrichtung (8) umfaßt, **dadurch gekennzeichnet, daß** der Körper (1,2,6) eine im wesentlichen röhrenförmige Form aufweist, das Faserempfangsteil als eine Röhre (13,19) ausgebildet und innerhalb des Körpers (1,2) angeordnet ist, eine Längensteuereinrichtung (3) zur Steuerung der Länge der Faser, die zu trennen und im wesentlichen zentral zu dem Körper (1,2,6) anzuordnen ist, vorgesehen ist, und daß eine Einrichtung (10) zum Ergreifen des Pufferüberzugs auf einer Faser entfernt von der Fasergreifeinrichtung (8) angeordnet vorgesehen ist.

2. Ein Werkzeug nach Anspruch 1, **dadurch gekennzeichnet, daß** die Längensteuereinrichtung (3) einen Indikatorpfosten (22) aufweist, der zur visuellen Bestätigung der Trennlängeneinstellung bis zur Aussenseite des Körpers (2) hindurchragt.

3. Ein Werkzeug nach Anspruch 1 oder 2, **dadurch gekennzeichnet, daß** die Schneideinrichtung einen Schneidkanteneinsatz (4), der um einen Schwenkarm (5) verschwenkt, und ein elastisches Polster (17) derart aufweist, daß die Faser in das Polster (17) gedrückt wird, während sie durch den Schneidkanteneinsatz (4) eingekerbt wird.

Fig. I

Fig. II.

Fig. III

Fig. IV

Fig. V

Fig. VI

Fig. 8

Fig. 7

7